# FASCICULE DE BREVET EUROPEEN

(11) **EP 3 151 047 B1**
(45) Date de publication et mention de la délivrance du brevet: **05.08.2020**
(21) Numéro de dépôt: 16191394.2
(22) Date de dépôt: 29.09.2016
(51) Int. Cl.: G02B 6/42, H04B 10/80, F16C 29/00, G02B 6/36, F21V 8/00

(54) **DISPOSITIF DE TRANSMISSION D'INFORMATIONS COMPRENANT UNE RÈGLE ÉQUIPÉE D'UNE FIBRE OPTIQUE PHOTOLUMINESCENTE ET PROCÉDÉ D'ASSEMBLAGE D'UN TEL DISPOSITIF**
ÜBERTRAGUNGSGERÄT MIT EINEM LINEAL, DAS MIT EINER OPTISCHEN PHOTOLUMINESZENZFASER AUSGESTATTET IST, UND VERFAHREN ZUM ZUSAMMENBAU EINES SOLCHEN GERÄTS
INFORMATION TRANSMISSION DEVICE COMPRISING A RULER PROVIDED WITH PHOTOLUMINESCENT OPTICAL FIBRE AND METHOD FOR ASSEMBLING SUCH A DEVICE

(30) Priorité: 30.09.2015 FR 1559274
(43) Date de publication de la demande: 05.04.2017
(73) Titulaire: NTN-SNR Roulements, 74010 Annecy (FR)
(72) Inventeur: AZAM, Guy, 73100 Pugny-Chatenod (FR)
(74) Mandataire: Alatis

(56) Documents cités:
- WO-A1-2015/006302
- DE-A1- 4 421 616
- JP-A- 2005 326 511
- US-A1- 2010 066 254
- US-A1- 2014 153 880
- US-B1- 6 965 709
- US-B2- 9 067 530

## Description

### DOMAINE TECHNIQUE DE L'INVENTION

L'invention se rapporte à un dispositif de transmission d'informations comportant une règle équipée d'une fibre optique photoluminescente, destinée à être positionnée par exemple le long d'une voie de guidage rectiligne pour un chariot glissant, ou à être intégrée à une telle voie de guidage, afin notamment de former un guide d'onde permettant de recueillir un signal lumineux incident émis par une source lumineuse associée à l'équipage mobile et de véhiculer le long de la fibre jusqu'à un récepteur un signal lumineux induit par le signal lumineux incident.

### ÉTAT DE LA TECHNIQUE ANTÉRIEURE

Dans le document DE4421616 est décrit un dispositif de transmission d'informations depuis un équipage mobile guidé le long d'une trajectoire fixe circulaire, comportant une fibre optique photoluminescente logée dans une gorge en cercle, une source lumineuse d'excitation destinée à être solidaire de l'équipage mobile pour illuminer transversalement la fibre optique photoluminescente, et au moins une cellule photosensible située à une extrémité de la fibre optique photoluminescente. La fibre optique, logée dans la gorge, est directement exposée à l'extérieur sans interface.

Dans le document US 9 067 530 est décrit un composant d'équipement intérieur de véhicule automobile, une fibre optique logée dans une gorge formée dans une partie du corps du composant et recouverte par une autre partie du corps du composant, et un film fluorescent inséré entre les deux parties du corps du composant et dont une face recouvre directement la gorge de façon à pouvoir être illuminé par la fibre optique, qui constitue ici une source lumineuse. La tranche du film fluorescent affleure à la surface extérieure définie par les deux parties du corps du composant, qui est destinée à être tournée vers l'intérieur de l'habitacle. La source lumineuse excite le film fluorescent qui génère une lumière visible par le passager du véhicule par la tranche du film fluorescent, sous forme de ligne lumineuse. En variante, il est proposé de se dispenser de la deuxième partie du corps du composant, de sorte que la gorge est uniquement recouverte par le film fluorescent. La lumière émise par la fibre optique traverse alors le film fluorescent. En variante, il est également envisagé de remplacer le film fluorescent par un film incolore ayant une surface extérieure structurée de manière à constituer un guide de lumière pour guider la lumière vers la tranche du film.

Dans le document US 6,965,709 est décrit un capteur de position optique fluorescent comportant une source lumineuse mobile le long d'une trajectoire prédéterminée qui peut être rectiligne, mais dont la position est inconnue, un guide de lumière fluorescent positionné le long de la trajectoire, et un ou deux photodétecteurs positionné à une ou deux extrémités du guide de lumière. La lumière émise par la source lumineuse excite le guide de lumière fluorescent qui émet un signal lumineux voyageant le long du guide de lumière jusqu'à son extrémité. On détermine la position de la source lumineuse en mesurant l'atténuation du signal lumineux détecté. Suivant un mode de réalisation, le guide de lumière est formé par un faisceau de fibres optiques fluorescentes logé dans une gaine tubulaire présentant une fenêtre transparente tournée vers la source lumineuse.

Dans les demandes publiées FR3019656 et EP2927647 est décrit un dispositif de transmission d'informations depuis un équipage mobile guidé le long d'une trajectoire fixe prédéterminée, et qui comporte une fibre optique photoluminescente positionnée le long de la trajectoire, une source lumineuse d'excitation destinée à être solidaire de l'équipage mobile pour illuminer transversalement la fibre optique photoluminescente, et au moins une cellule photosensible formant le récepteur et située à au moins une extrémité de la fibre optique. En pratique, la voie de guidage est constituée par un rail, et la fibre optique photoluminescente est disposée dans une gorge formée dans le rail de guidage. La gorge peut présenter une ou plusieurs parois réfléchissantes et la fibre optique photoluminescente est de préférence recouverte d'une couche de résine. La résine referme la gorge en adhérant à ses parois. Pour ne pas entraver l'émission photonique secondaire, la résine utilisée présente une faible absorbance dans la gamme de longueur d'ondes de la diode électroluminesente provoquant l'émission photonique secondaire dans la fibre optique photoluminescente. La résine participe au maintien de la fibre dans la gorge et à la protection chimique et mécanique de la fibre. Un système de nettoyage, constitué par exemple d'un joint monté sur l'équipage mobile, vient frotter la surface supérieure de la résine pour la maintenir propre.

En pratique, la résine utilisée est réticulable par exposition à un rayonnement ultraviolet, ce qui permet un procédé de fabrication dans lequel la fibre est insérée dans la gorge, puis le volume de la gorge non occupé par la fibre est rempli de résine non réticulée. Mais la faible viscosité de la résine favorise un écoulement newtonien et la formation d'une surface externe concave ou convexe selon la géométrie des points d'accroche sur le rail. On ne parvient pas par cette méthode à obtenir une surface régulièrement plane, ce qui se traduit par des risques d'encrassement des zones creuses de la surface, et de détérioration des zones en saillie lors des passages répétés du joint de nettoyage. On peut modifier le procédé de fabrication en prévoyant, après remplissage de la gorge par la résine non réticulée, un lissage de la surface supérieure de résine avec un racleur avant exposition à un rayonnement ultraviolet pour obtenir la réticulation. Mais, outre le fait qu'il ajoute une étape de fabrication, ce procédé modifié est difficile à maîtriser en conditions industrielles et ne donne pas nécessairement les résultats de planéité escomptés.

### EXPOSÉ DE L'INVENTION

L'invention vise à remédier aux inconvénients de l'état de la technique non publié précédemment exposé et à proposer des moyens simples pour garantir une bonne planéité d'une interface transparente entre un dispositif à fibre optique logé dans une gorge et le milieu extérieur.

Pour ce faire est proposé, selon un premier aspect de l'invention, un dispositif de transmission d'informations selon la revendication 1. L'application d'une bande de matière plastique permet l'obtention d'une surface parfaitement plane. Elle rend l'opération de raclage inutile. La gorge peut avoir un profil quelconque, notamment en U ou en V, en arc de cercle, d'ellipse, en ogives paraboliques, ou le cas échéant en queue d'aronde pour mieux piéger la lumière incidente et pour limiter le volume de résine nécessaire à l'inclusion et ainsi réduire le temps de photopolymérisation. Certaines au moins des parois de la gorges peuvent être partiellement ou complètement réfléchissantes, pour faire converger la lumière vers la fibre optique.

De préférence la bande de matière plastique comporte une face intérieure plane parallèle et opposée à la face extérieure plane.

Suivant un mode de réalisation la bande de matière plastique présente un profil en U avec une paroi de fond formant la face supérieure et deux parois latérales en appui contre des parois latérales de la gorge. Les branches peuvent être sensiblement parallèles pour s'adapter à une gorge présentant des parois latérales parallèles. Les branches peuvent également être divergentes vers la paroi de fond, pour s'adapter à une gorge ouverte sensiblement en V. Elles peuvent également être convergentes vers la paroi de fond, pour s'adapter à une gorge en queue d'aronde.

Suivant un mode de réalisation, les parois latérales de la bande de matière plastique sont réfléchissantes, pour diriger la lumière vers la fibre optique.

Suivant un mode de réalisation particulièrement avantageux, la bande de matière plastique est plane, et d'épaisseur de préférence inférieure à 1 mm, de préférence inférieure à 0,5mm, de préférence inférieure à 0,2 mm. L'épaisseur très fine de la bande de matière plastique permet d'obtenir un taux de transmittance lumineuse très élevé, par exemple supérieur à 90%.

Suivant un mode de réalisation la bande de matière plastique comporte des rebords qui viennent en appui contre la règle, de part et d'autre de la gorge. Les rebords permettent de fixer la bande de matière plastique à la règle. La règle comporte de préférence un embrèvement dans lequel est formé la gorge, et formant des faces d'appui pour les rebords de la bande de matière plastique, de part et d'autre de la gorge. L'embrèvement a de préférence une profondeur supérieure à l'épaisseur des rebords de la bande de matière plastique, et la surface extérieure plane de la bande de matière plastique est située en retrait dans l'embrèvement, qui constitue une protection contre les chocs, ou alors qui peut constituer une surépaisseur permettant de déposer un adhésif, une colle ou de la résine tout en laissant la paroi extérieure affleurant à la surface du dispositif.

De préférence la fibre optique est en contact avec la bande de matière plastique. Ce contact peut être linéaire ou surfacique. Il permet de positionner la fibre optique au plus près de la face plane extérieure de la bande de matière plastique.

De préférence, la bande de matière plastique est recouverte d'un vernis de protection anti-rayures. Le verni de protection est choisi pour sa dureté élevée.

Suivant un mode de réalisation préféré, on prévoit en outre une résine, de préférence une résine réticulée, enrobant au moins partiellement la fibre optique, au moins entre la fibre optique et la bande de matière plastique ou entre la fibre optique et une paroi de la gorge. La fibre optique est au moins partiellement, voire totalement noyée dans la résine qui la maintient en position dans la gorge. La résine sera choisie pour sa faible absorbance à la longueur d'onde utile (par exemple à 400 nm environ), pour sa bonne adhérence avec la fibre et avec le matériau constituant les parois de la gorge, pour sa bonne résistance thermique et chimique (à la graisse, à l'huile de coupe, etc), pour sa dureté de surface et sa lipophilie. On pourra choisir notamment une résine référencée Dymax® 4-20418 / 4-20632. La dureté et la lipophilie pourront le cas échéant être obtenus par un additif à la résine ou par un traitement de surface, par exemple un dépôt de parylène. La résine pourra le cas échéant être réticulable par exposition à un rayonnement ultraviolet.

Suivant un mode de réalisation la fibre optique présente une section circulaire. Des fibres optiques à section carrée ou rectangulaire sont également envisageables, auquel cas la fibre optique présente une grande face tournée vers la bande de matière plastique.

La règle peut être positionnée parallèlement à une voie de guidage pour un équipage mobile. Elle peut également constituer elle-même tout ou partie d'une voie de guidage et comporter à cet effet des surfaces de guidage, par exemple des piste de roulement, de glissement ou de sustentation pour un équipage mobile en translation le long de la fibre optique.

Suivant un mode de réalisation particulièrement avantageux, la gorge possède une ou plusieurs parois réfléchissantes.

Suivant un autre aspect de l'invention, celle-ci a trait à une installation comportant une voie de guidage, un équipage mobile guidé sur la voie de guidage, caractérisée en ce qu'elle comporte en outre un dispositif de transmission d'informations tel que décrit précédemment, la règle étant fixée le long de la voie de guidage ou constituant tout ou partie de la voie de guidage, la source lumineuse d'excitation étant solidaire de l'équipage mobile et la cellule photosensible étant disposée à une extrémité de la fibre optique photoluminescente.

Suivant un autre aspect de l'invention, celle-ci a trait à un procédé de fabrication d'une règle telle que décrite précédemment, et suivant lequel on fixe dans un premier temps l'une à l'autre la fibre optique et la bande de matière plastique de sorte que la face extérieure plane de la bande de matière plastique soit tournée à l'opposé de la fibre optique pour former un sous-ensemble, puis on insère ce sous-ensemble dans la gorge de manière à ce que la fibre optique soit positionnée dans la gorge et à ce que la bande de matière plastique recouvre la gorge. Ce procédé est particulièrement adapté à une bande de matière plastique plus rigide que la fibre optique, par exemple à une bande de matière plastique à profil en U. On peut alors prévoir d'enduire au préalable la fibre optique avec une résine, de préférence une résine réticulable par exposition à un rayonnement lumineux. La réticulation de la résine peut avoir lieu au cours ou à la fin de l'étape de formation du sous-ensemble, et contribuer à la fixation de la fibre optique à la bande de matière plastique. Elle peut également être envisagée lorsque la fibre optique est positionnée dans la gorge.

Suivant un autre aspect de l'invention, celle-ci a trait à un procédé de fabrication d'une règle telle que décrite précédemment, et suivant lequel l'on positionne dans un premier temps la fibre optique dans la gorge, puis on applique la bande de matière plastique pour recouvrir la gorge. Ce procédé pourra notamment s'appliquer lorsque la bande de matière plastique est peu rigide, par exemple parce que son épaisseur est faible. On peut également envisager dans cette hypothèse on peut prévoir d'enduire au préalable la fibre optique avec une résine, de préférence une résine réticulable par exposition à un rayonnement lumineux. De préférence, la réticulation de la résine a lieu après avoir positionné la fibre optique dans la gorge.

Au cours des deux procédés de fabrication envisagés, on peut déposer une résine réticulable, de préférence une résine réticulable par exposition à un rayonnement lumineux, dans la gorge, avant d'insérer la fibre optique dans la gorge. De préférence, la résine réticulable est déposée dans la gorge dans une quantité telle que la résine réticulable déborde de la gorge lors de l'insertion de la fibre optique dans la gorge. Le surplus de résine constitue un film qui contribue à la fixation de la bande de matière plastique à la règle, de part et d'autre de la gorge.

La réticulation peut être obtenue en exposant la résine réticulable à un rayonnement pour former une résine réticulée, la fibre optique étant disposée de préférence au dessus de la bande de matière plastique avant ou durant l'exposition, pour faire migrer à distance de la bande de matière plastique d'éventuelles bulles formées dans la résine avant réticulation.

De préférence, on applique un verni de protection sur la surface extérieure de la bande de matière plastique recouvrant la gorge.

Par fibre optique, on entend ici toute guide d'onde linéaire apte à véhiculer un signal lumineux, dans le spectre visible ou non visible.

### BRÈVE DESCRIPTION DES FIGURES

D'autres caractéristiques et avantages de l'invention ressortiront à la lecture de la description qui suit, en référence aux figures annexées, qui illustrent :
- la figure 1, une vue schématique d'une installation comportant une règle selon un mode de réalisation de l'invention;
- la figure 2, une vue schématique en coupe transversale d'une règle à inclure dans un dispositif de transmission selon un mode de réalisation de l'invention;
- la figure 3, une vue d'un marbre utilisé dans un premier procédé de fabrication d'une règle selon la figure 2;
- la figure 4, une vue schématique d'une étape du premier procédé de fabrication;
- la figure 5, une vue schématique d'une étape du premier procédé de fabrication, faisant suite à l'étape de la figure 4;
- la figure 6, une vue schématique d'une étape du premier procédé de fabrication, faisant suite à l'étape de la figure 5;
- la figure 7, une vue schématique d'une étape d'un deuxième procédé de fabrication de la règle de la figure 2;
- la figure 8, une vue schématique d'une autre étape du deuxième procédé de fabrication de la règle de la figure 2;
- la figure 9, une vue schématique d'une étape de fabrication d'un dispositif de transmission selon un deuxième mode de réalisation de l'invention;
- la figure 10, une vue schématique d'une autre étape de fabrication d'un dispositif de transmission selon le deuxième mode de réalisation de l'invention;
- la figure 11, vue en une coupe transversale de la règle selon le deuxième mode de réalisation de l'invention;
- la figure 12 une vue schématique en coupe transversale d'un détail d'une règle selon un troisième mode de réalisation de l'invention;
- la figure 13, une vue schématique en coupe transversale d'un détail d'une règle selon un quatrième mode de réalisation de l'invention.

Pour plus de clarté, les éléments identiques ou similaires sont repérés par des signes de référence identiques sur l'ensemble des figures.

### DESCRIPTION DÉTAILLÉE DE MODES DE RÉALISATION

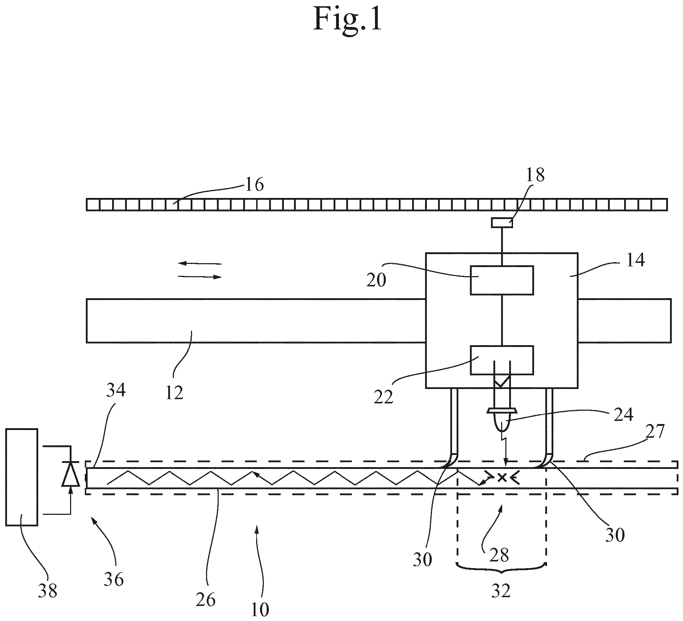

Sur la figure **1** est illustrée une installation **10** comportant une voie de guidage rectiligne fixe **12,** par exemple un rail de guidage, et un équipage mobile **14** guidé sur la voie de guidage, par exemple un chariot roulant sur cette voie, qui peut être entraîné par exemple par un mécanisme à vis sans fin (non représenté). Le long de la voie **12** est disposé un codeur de position **16** lu par un capteur **18** embarqué sur l'équipage mobile **14.** Le codeur de position **16** peut être un codeur magnétique comportant une ou plusieurs bandes présentant une succession de segments aimantés dont les directions de polarisation sont alternées. Il peut également s'agir d'une simple crémaillère en matériau ferromagnétique, dont la succession de dents et de creux est détectée à distance par le capteur **18.** Le codeur peut également être un codeur optique présentant des graduations lues à distance par le capteur **18.**

Quel que soit le principe retenu pour la détection de la position du chariot par le capteur **18,** le signal produit par ce dernier fait l'objet d'un traitement dans un circuit de conditionnement du signal **20** relié à un circuit de commande **22** d'une source lumineuse d'excitation **24,** par exemple une diode électroluminescente, disposée en regard et à distance d'une fibre optique photoluminescente **26** fixée à une règle rigide **27** disposée le long de la voie **12.** La fibre optique est dopée de pigments fluorescents **28** dont la densité est de préférence constante le long de la fibre **26.** L'équipage mobile **14** est pourvu de frotteurs **30** en contact avec la fibre optique et situés, par rapport à la direction de la trajectoire, de part et d'autre de la source lumineuse d'excitation **24,** de manière à ce que la portion **32** de la fibre optique **26** en regard de la source lumineuse **24** soit propre.

À une extrémité **34** de la fibre optique photoluminescente **26** est positionnée une cellule photoélectrique **36** de réception reliée à un circuit électrique de réception **38.**

L'installation **10** fonctionne de la manière suivante. Lors de mouvement de l'équipage mobile **14,** l'information de position lue par le capteur **18** et conditionnée par le circuit de conditionnement **20** donne lieu à l'émission, par la source lumineuse **24** contrôlée par le circuit de commande **22,** d'un signal lumineux numérique qui, quelle que soit la position de l'équipage mobile **14** le long de la voie **12,** illumine une portion **32** de la fibre optique **26** située à ce moment en regard de la source lumineuse **24.**

Le signal lumineux radial incident en provenance de la source lumineuse **24** pénètre dans la fibre optique **26** où il excite les pigments fluorescents **28** à l'intérieur de la fibre **26.** Plus précisément, une partie des photons pénétrant dans la fibre **26** sont absorbés par les pigments fluorescents **28,** qui passent par un état électroniquement excité puis retournent rapidement à leur état fondamental en émettant un photon. Les photons émis transitent ensuite dans la fibre optique en étant réfléchis par les parois de la fibre, et sont ainsi guidés jusqu'à la cellule photoélectrique **36** qui les détecte, permettant un traitement ultérieur par le circuit électrique de détection **38.**

Le rendement de transmission entre l'émission par la source lumineuse d'excitation **24** du signal lumineux d'excitation et la lumière reçue par la cellule de réception photoélectrique **36** est très faible, et fonction de la pénétration du signal lumineux d'excitation dans la fibre **26,** de l'efficacité de l'effet fluorescent, de la fraction de la lumière réémise piégée effectivement dans la fibre mais également de l'atténuation du signal lumineux secondaire émis par les pigments, dans sa trajectoire le long de la fibre **26.** Les essais montrent toutefois que la réception reste possible sur des distances pouvant dépasser plusieurs mètres. La vitesse de transmission est rapide. La bande passante peut être limitée par le temps de réponse du phénomène fluorescent. À titre indicatif, on peut atteindre, en choisissant des pigments à faible rémanence, des bandes passantes de 20MHz, voire 60MHz, ce qui est parfaitement adapté à la transmission d'informations de position. Le décalage de longueur d'onde observé entre le signal d'excitation et le signal secondaire émis par la fibre optique photoluminescente propre au phénomène de fluorescence permet à la lumière émise par photoluminescence de ne pas être réabsorbée par la fibre.

Pour augmenter l'efficacité de la pénétration du signal lumineux d'excitation dans la fibre optique photoluminescente, limiter le bruit potentiellement généré par l'environnement lumineux dans lequel est fait la mesure et protéger la fibre optique photoluminescente des chocs, on loge la fibre optique photoluminescente **26** dans une gorge longitudinale **40,** formée dans un embrèvement **42** de la règle rigide **27.** L'embrèvement **42** forme, latéralement de part et d'autre de la gorge **40,** deux faces d'appui **44** tournées vers l'extérieur, sur lesquels viennent se positionner les rebords latéraux **46** d'une bande de matière plastique **48** qui recouvre la gorge **40** et la fibre optique photoluminescente **26.**

La bande de matière plastique **48** est transparente et présente une face extérieure **50** plane et lisse tournée à l'opposé de la gorge **40,** de préférence recouverte d'un vernis de protection anti-rayures.

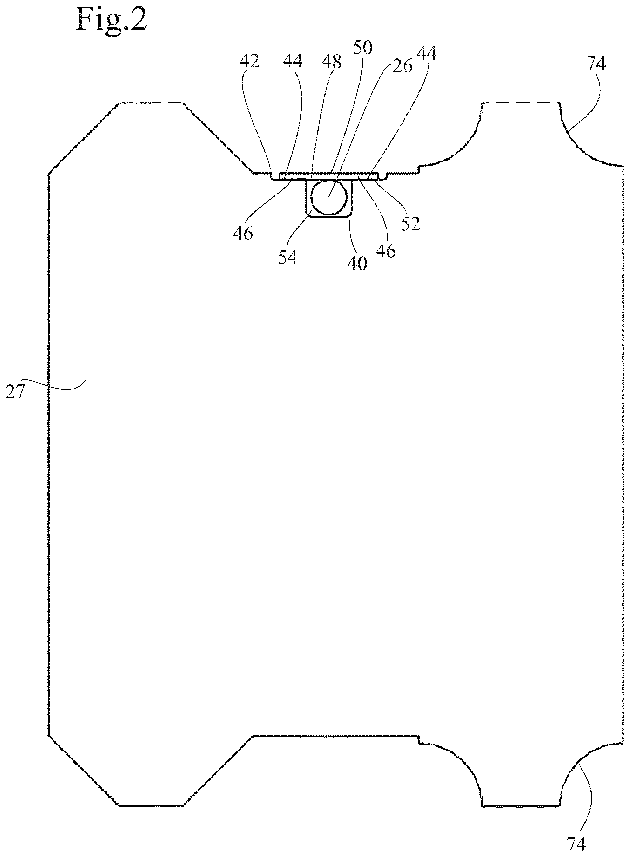

Dans le mode de réalisation de la figure **2****,** la bande de matière plastique **48** comporte une face intérieure plane **52** parallèle et opposée à la face extérieure plane **50.** La bande de matière plastique **48** présente ainsi une épaisseur de préférence inférieure à 1 mm, de préférence inférieure à 0,5mm, de préférence inférieure à 0,2 mm.

La fibre optique photoluminescente **26** est de préférence en contact avec la bande de matière plastique **48.** La fibre optique photoluminescente **26** illustrée sur les figures présente une section circulaire, bien que d'autres sections puissent être envisagées. Le volume intérieur de la gorge **40** non occupé par la fibre optique **26** est rempli d'une résine réticulée **54,** qui constitue également un film entre les rebords latéraux **46** de la bande de matière plastique **48** et les faces d'appui **44** de l'embrèvement **42** situées latéralement de part et d'autre de la gorge **40.**

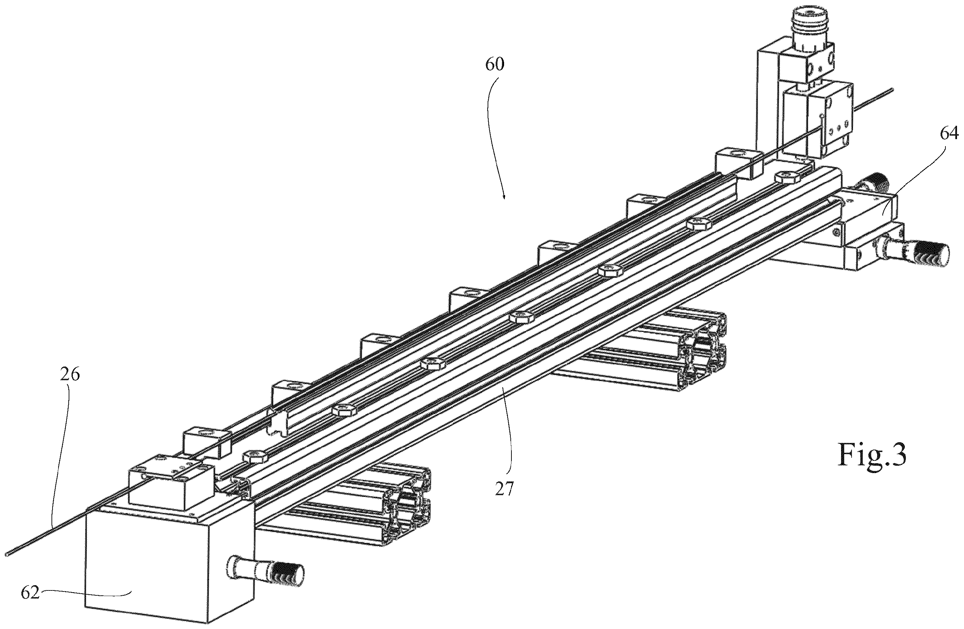

Pour fixer la fibre optique photoluminescente **26** dans la gorge **40,** différents procédés sont envisagés. Suivant un premier mode de réalisation, illustré sur les figures **3** à **6****,** le rail est bridé sur un marbre **60.** Le marbre **60** est équipé de deux unités de prise en charge **62, 64** placées de part et d'autre de la règle. Chacune de ces unités **62, 64** est équipée de chariots à micro-déplacements permettant de régler la hauteur et l'alignement longitudinal de la fibre optique photoluminescente dans la rainure. Une de ces unités **(64)** est équipée d'un système de mise en tension de la fibre optique photoluminescente.

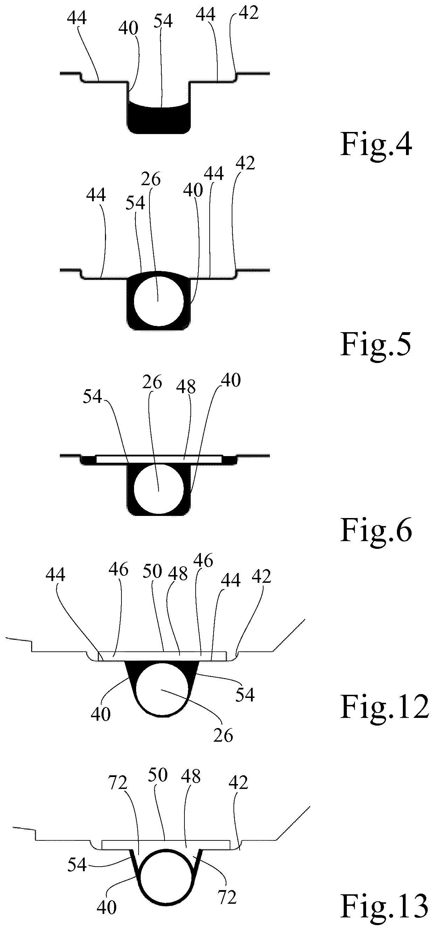

Une quantité définie de résine photo-réticulante **54** est déposée dans la gorge **40,** comme illustré sur la figure **4****.** Puis la fibre optique photoluminescente **26** tendue est descendue dans le bain de résine, comme illustré sur la figure **5****.** Un temps d'attente est alors nécessaire pour permettre le débullage et pour que la résine enveloppe complètement la fibre optique photoluminescente **26.** Le volume de la fibre optique photoluminescente **26** et de la résine **54** doit être très légèrement supérieur au volume mort de la gorge **40.** Puis la bande de matière plastique **48** est déroulée et plaquée dans l'embrèvement **42,** comme illustré sur la figure **6****.** L'embrèvement **42** est plus large que la bande de matière plastique **48,** laissant à la résine **54** en excès un espace de débordement. L'ensemble est ensuite nettoyé puis insolé.

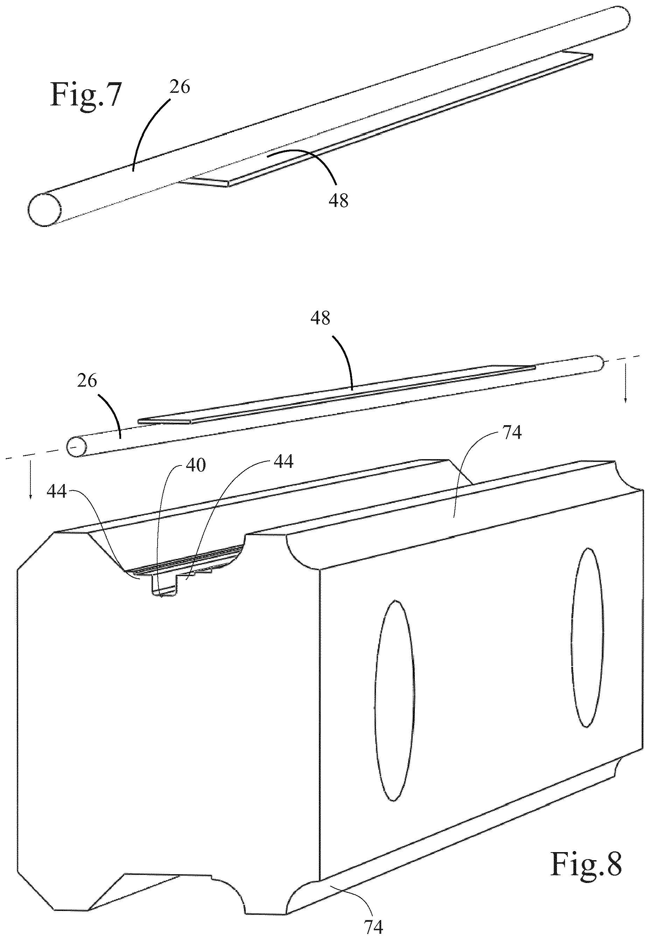

Suivant un deuxième mode de fabrication illustré sur les figures **7** et **8****,** la fibre optique **26** est tout d'abord tendue et enduite d'une fine couche de résine **54.** Elle est alors alignée et déposée sur la bande de matière plastique **48.** Le sous-ensemble est insolé.

Un volume de résine est déposé dans la gorge **40** de la règle **27.** Ce volume est légèrement est prévu pour que son volume cumulé au volume de la fibre enduite d'une fine couche de résine, soit légèrement supérieur au volume mort de la gorge **40.** Le sous-ensemble constitué par la fibre optique **26** et la bande de matière plastique **48** est placé sur la règle **27.**

La règle **27** est retournée sur une table d'insolation, pour permettre aux éventuelles bulles d'air emprisonnées dans la résine **54** de migrer vers le fond de la gorge **40.** Puis on expose la gorge et son contenu à un rayonnement qui provoque la réticulation de la résine.

Dans toutes les variantes du procédé, on peut optionnellement appliquer un verni de protection sur la surface extérieure **50** de la bande de matière plastique **48,** une fois que celle-ci recouvre la gorge **40,** par exemple après l'étape d'insolation.

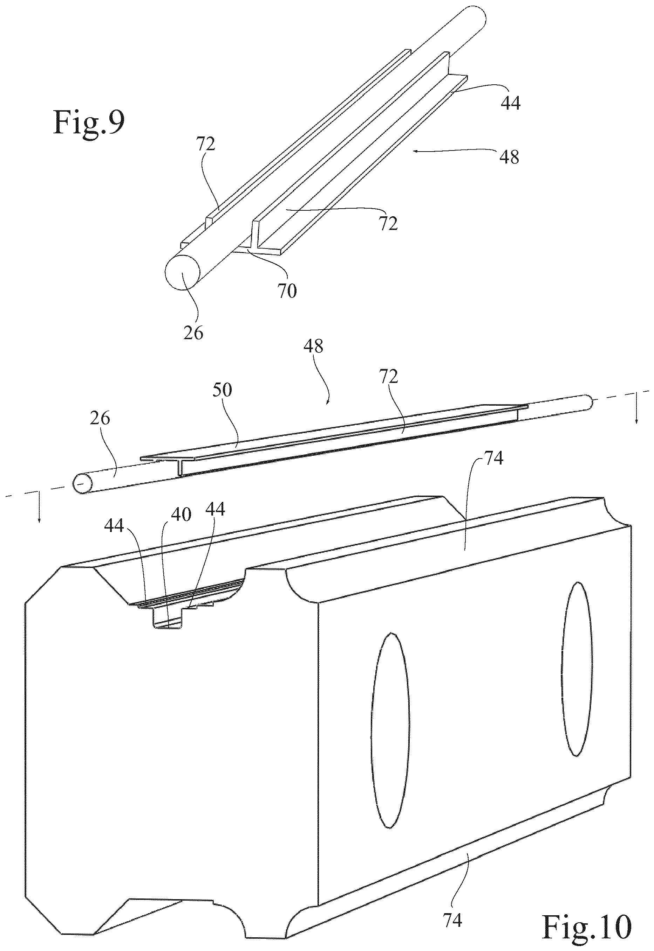

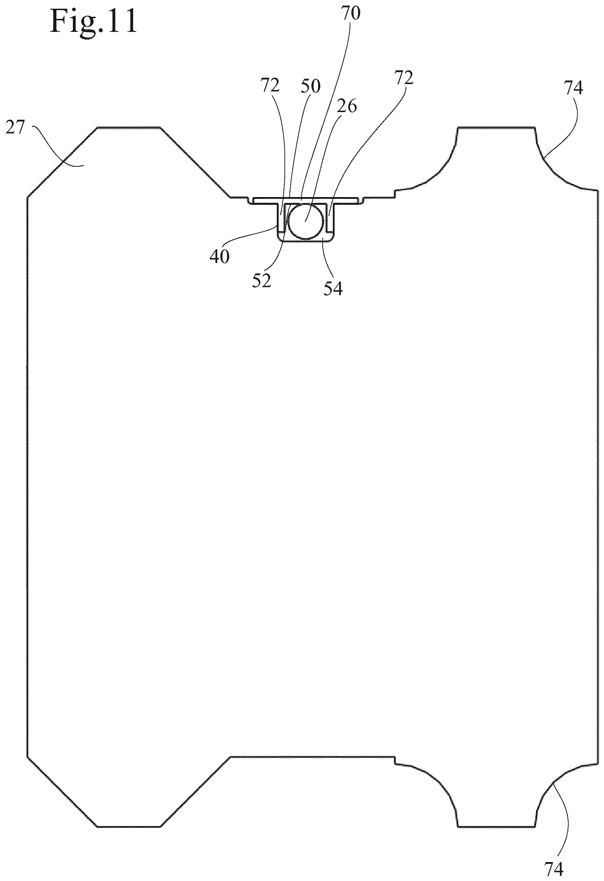

Suivant un autre mode de réalisation, illustré sur les figures **9** à **11****,** la bande de matière plastique **48** présente un profil en U avec une paroi de fond **70** formant la face extérieure **50** et la face intérieure **52,** et deux parois latérales **72** en appui contre des parois latérales de la gorge **40.** Tout ou partie du volume de la gorge **40** non occupé par la fibre optique photoluminescente **26** ou la bande de matière plastique **48** peut être remplie par de la résine transparente réticulée **54.**

Les deux modes de fabrication décrits précédemment avec une bande de matière plastique **48** plane sont transposables à la bande à section en U. On peut en effet commencer par insérer la fibre optique photoluminescente **26** dans la gorge **40,** le cas échéant partiellement remplie au préalable de résine réticulable **54,** avant de positionner la bande de matière plastique **48,** ce qui impose d'insérer les parois latérales **72** de la bande de matière plastique **48** le long des parois de la gorge **40,** de chaque côté de la fibre optique **26.** On peut alternativement positionner la fibre optique **26** dans le logement constitué entre les parois latérales **72** de la bande de matière plastique **48,** comme illustré sur la figure **9****,** le cas échéant après avoir partiellement rempli la cavité en U de la bande de matière plastique **48** avec de la résine réticulable ou après avoir enduit la fibre optique **26** de résine réticulable, puis insoler le tout pour former un sous-ensemble que l'on vient ensuite positionner, comme illustré sur la figure **10****,** dans la gorge **40** de la règle **27.**

Dans l'ensemble des modes de réalisation, la règle **27** peut ne faire qu'un avec un rail de guidage formant la voie de guidage, et être pourvue à cet effet de pistes de guidage **74,** par exemple de pistes de roulement ou de glissement, permettant le guidage d'un équipage mobile **14.**

Sur la figure **12** est illustré un détail d'une règle selon un troisième mode de réalisation de l'invention, qui ne diffère du mode de réalisation des figures 2 à 6 que par la forme de la gorge **40,** qui présente un fond incurvé en arc de cercle et des parois latérales planes évasées. La résine **54** remplit ici l'espace laissé libre à l'intérieur de la gorge **40.**

Sur la figure **13** est illustré un détail d'une règle selon un quatrième mode de réalisation de l'invention, qui ne diffère du mode de réalisation de la figure **12** que par la forme spécifique de la bande de matière plastique **48,** qui présente des branches latérales **72** qui présentent chacune une face concave incurvée en arc de cercle tournée vers la fibre optique photoluminescente **26** et une face plane tournée vers la parois latérale évasée de la gorge **40.** On minimise ainsi l'apport de résine **54,** qui ne constitue qu'un film entre les parois de la gorge **40,** la fibre optique et la bande de matière plastique **48.** On minimise ainsi le temps de réticulation de la résine **54.**

Naturellement, les exemples représentés sur les figures et discutés ci-dessus ne sont donnés qu'à titre illustratif et non limitatif. Il est explicitement prévu que l'on puisse combiner entre eux les différents modes de réalisation illustrés pour en proposer d'autres.

La résine photo-réticulante peut être remplacée par d'autres types de résines transparente, ou d'autres matériaux de remplissage transparents. Alternativement, il peut être envisagé de se passer complètement de matériau de remplissage, ou d'utiliser un adhésif, de la colle pour solidariser les différentes pièces ou sous-ensembles.

On peut avoir avantage à rendre réfléchissantes au moins certaines des parois de la gorge, par exemple la paroi de fond ou les parois latérales. Dans le cas d'une bande de matériau plastique à profil en U, on peut envisager de rendre réfléchissante les parois en U. Le profil de la gorge peut varier, notamment pour s'adapter à la forme de la fibre optique **26** et au rayonnement incident de la source lumineuse d'excitation **24** et présenter par exemple un fond concave de profil en portion l'ellipse ou de parabole.

La bande de matière plastique peut avoir tout ou partie de sa face intérieure préencollée. Le préencollage des parties latérales de la face intérieure de la bande de matière plastique permet la fixation de la bande de matière plastique aux rebords latéraux du rail. Le préencollage de la partie médiane de la face intérieure peut permettre la fixation de la fibre optique à la bande de matière plastique.

Les principes d'assemblage décrit ici sont applicables à tout types de fibre optique photoluminescente en verre ou en matériau synthétique.

La règle doit être rigide et est de préférence un profilé métallique, par exemple d'acier ou d'aluminium.

## Revendications

1. Dispositif de transmission d'informations depuis un équipage mobile (14) guidé le long d'une trajectoire fixe prédéterminée, comportant une fibre optique photoluminescente (26) logée dans une gorge (40), une source lumineuse d'excitation (24) destinée à être solidaire de l'équipage mobile (14) pour illuminer transversalement la fibre optique photoluminescente (26), et au moins une cellule photosensible (36) située à une extrémité (34) de la fibre optique photoluminescente (26), **caractérisé en ce que** la trajectoire fixe prédéterminée est rectiligne, et **en ce que** le dispositif de transmission comporte en outre une règle rigide (27) destinée à être positionnée le long de la trajectoire rectiligne, la règle rigide (27) comportant la gorge qui est rectiligne (40), la fibre optique photoluminescente (26) logée dans la gorge (40) et fixe par rapport à la règle (27), et une bande de matière plastique transparente (48) recouvrant la gorge (40) et la fibre optique photoluminescente (26) et présentant une face extérieure plane (50) tournée à l'opposé de la gorge (48).

2. Dispositif de transmission d'informations selon la revendication 1, **caractérisé en ce que** la bande de matière plastique (48) comporte une face intérieure plane (52) parallèle et opposée à la face extérieure plane (50).

3. Dispositif de transmission d'informations selon l'une quelconque des revendications précédentes, **caractérisé en ce que** la bande de matière plastique (48) présente un profil en U avec une paroi de fond (70) formant la face supérieure (48) et deux parois latérales (72) en appui contre des parois latérales de la gorge (40).

4. Dispositif de transmission d'informations selon l'une quelconque des revendications 1 ou 2, **caractérisé en ce que** la bande de matière plastique (48) est plane, et d'épaisseur de préférence inférieure à 1 mm, de préférence inférieure à 0,5mm, de préférence inférieure à 0,2 mm.

5. Dispositif de transmission d'informations selon l'une quelconque des revendications précédentes, **caractérisé en ce que** la bande de matière plastique (48) comporte des rebords (46) qui viennent en appui contre la règle (27), de part et d'autre de la gorge (40).

6. Dispositif de transmission d'informations selon la revendication 5, **caractérisé en ce que** la règle (27) comporte un embrèvement (42) dans lequel est formé la gorge (40), et formant des faces d'appui (44) pour les rebords (46) de la bande de matière plastique (48), de part et d'autre de la gorge (40).

7. Dispositif de transmission d'informations selon l'une quelconque des revendications précédentes, **caractérisé en ce que** la fibre optique photoluminescente (26) est en contact avec la bande de matière plastique (48).

8. Dispositif de transmission d'informations selon l'une quelconque des revendications précédentes, **caractérisé en ce que** la bande de matière plastique (48) est recouverte d'un vernis de protection anti-rayures.

9. Dispositif de transmission d'informations selon l'une quelconque des revendications précédentes, **caractérisé en ce que** la règle (27) comporte en outre une résine (54), de préférence une résine réticulée, enrobant au moins partiellement la fibre optique photoluminescente (26), au moins entre la fibre optique photoluminescente (26) et la bande de matière plastique (48) ou entre la fibre optique photoluminescente (26) et une paroi de la gorge (40).

10. Dispositif de transmission d'informations selon l'une quelconque des revendications précédentes, **caractérisé en ce que** la règle (27) comporte des surfaces de guidage (74) pour un équipage (14) mobile en translation le long de la fibre optique photoluminescente (26).

11. Dispositif de transmission d'informations selon l'une quelconque des revendications précédentes, **caractérisé en ce que** la gorge (40) possède une ou plusieurs parois réfléchissantes.

12. Installation (10) comportant une voie de guidage, et un équipage mobile (14) guidé sur la voie de guidage (12), **caractérisée en ce qu'**elle comporte en outre un dispositif de transmission d'informations selon l'une quelconque des revendications précédentes, la règle (27) étant fixée le long de la voie de guidage (12) ou constituant tout ou partie de la voie de guidage, la source lumineuse d'excitation (24) étant solidaire de l'équipage mobile (14) et la cellule photosensible (36) étant disposée à une extrémité (34) de la fibre optique photoluminescente (26).

13. Procédé de fabrication d'un dispositif de transmission d'informations selon l'une quelconque des revendications 1 à 11, **caractérisé en ce que** l'on fixe dans un premier temps l'une à l'autre la fibre optique photoluminescente (26) et la bande de matière plastique (48) de sorte que la face extérieure plane (50) de la bande de matière plastique (48) soit tournée à l'opposé de la fibre optique photoluminescente (26) pour former un sous-ensemble, puis on insère ce sous-ensemble dans la gorge (40) de manière à ce que la fibre optique photoluminescente (26) soit positionnée dans la gorge (40) et à ce que la bande de matière plastique (48) recouvre la gorge (40).

14. Procédé de fabrication d'un dispositif de transmission d'informations selon l'une quelconque des revendications 1 à 11, **caractérisé en ce que** l'on positionne dans un premier temps la fibre optique photoluminescente (26) dans la gorge (48), puis on applique la bande de matière plastique (48) pour recouvrir la gorge (50).

## Patentansprüche

1. Vorrichtung zur Übertragung von Informationen von einer mobilen Ausrüstung (14), die entlang einer vorbestimmten festen Bahn geführt ist, umfassend eine optische Photolumineszenzfaser (26), die in einer Auskehlung (40) aufgenommen ist, eine Erregungslichtquelle (24), die dazu bestimmt ist, fest mit der mobilen Ausrüstung (14) verbunden zu sein, um die optische Photolumineszenzfaser (26) transversal zu beleuchten, und wenigstens eine lichtempfindliche Zelle (36), die an einem Ende (34) der optischen Photolumineszenzfaser (26) angeordnet ist, **dadurch gekennzeichnet, dass** die vorbestimmte feste Bahn geradlinig ist, und dass die Übertragungsvorrichtung darüber hinaus einen steifen Maßstab (27) umfasst, der entlang der geradlinigen Bahn angeordnet ist, wobei der steife Maßstab (27) die Auskehlung umfasst, die geradlinig (40) ist, wobei die optische Photolumineszenzfaser (26) in der Auskehlung (40) aufgenommen und im Verhältnis zum Maßstab (27) fest ist, und wobei ein Band aus transparentem Plastikmaterial (48) die Auskehlung (40) und die optische Photolumineszenzfaser (26) abdeckt und eine ebene äußere Seite (50) aufweist, die der Auskehlung (48) entgegengesetzt angeordnet ist.

2. Vorrichtung zur Übertragung von Informationen gemäß Anspruch 1, **dadurch gekennzeichnet, dass** das Band aus Plastikmaterial (48) eine ebene innere Seite (52) umfasst, die zur ebenen äußeren Seite (50) parallel und entgegengesetzt ist.

3. Vorrichtung zur Übertragung von Informationen gemäß irgendeinem der voranstehenden Ansprüche, **dadurch gekennzeichnet, dass** das Band aus Plastikmaterial (48) ein U-förmiges Profil mit einer Bodenwand (70), die die obere Seite (48) bildet, und zwei Seitenwände (72), die gegen die Seitenwände der Auskehlung (40) zum Aufstützen kommen, aufweist.

4. Vorrichtung zur Übertragung von Informationen gemäß irgendeinem der Ansprüche 1 oder 2, **dadurch gekennzeichnet, dass** das Band aus Plastikmaterial (48) eben ist, eine Dicke von bevorzugt weniger als 1 mm, bevorzugt weniger als 0,5 mm, bevorzugt weniger als 0,2 mm aufweist.

5. Vorrichtung zur Übertragung von Informationen gemäß irgendeinem der voranstehenden Ansprüche, **dadurch gekennzeichnet, dass** das Band aus Plastikmaterial (48) Ränder (46) umfasst, die auf jeder Seite der Auskehlung (40) gegen den Maßstab (27) zum Aufliegen kommen.

6. Vorrichtung zur Übertragung von Informationen gemäß Anspruch 5, **dadurch gekennzeichnet, dass** der Maßstab (27) einen Rücksprung (42) umfasst, in dem die Auskehlung (40) gebildet ist, und auf jeder Seite der Auskehlung (40) Stützseiten (44) für die Ränder (46) des Bandes aus Plastikmaterial (48) bildet.

7. Vorrichtung zur Übertragung von Informationen gemäß irgendeinem der voranstehenden Ansprüche, **dadurch gekennzeichnet, dass** die optische Photolumineszenzfaser (26) mit dem Band aus Plastikmaterial (48) in Kontakt ist.

8. Vorrichtung zur Übertragung von Informationen gemäß irgendeinem der voranstehenden Ansprüche, **dadurch gekennzeichnet, dass** das Band aus Plastikmaterial (48) von einem kratzfesten Schutzlack abgedeckt ist.

9. Vorrichtung zur Übertragung von Informationen gemäß irgendeinem der voranstehenden Ansprüche, **dadurch gekennzeichnet, dass** der Maßstab (27) darüber hinaus ein Harz (54), bevorzugt ein vernetztes Harz, das wenigstens teilweise die optische Photolumineszenzfaser (26) überzieht, wenigstens zwischen der optischen Photolumineszenzfaser (26) und dem Band aus Plastikmaterial (48) oder zwischen der optischen Photolumineszenzfaser (26) und einer Wand der Auskehlung (40) umfasst.

10. Vorrichtung zur Übertragung von Informationen gemäß irgendeinem der voranstehenden Ansprüche, **dadurch gekennzeichnet, dass** der Maßstab (27) Führungsflächen (74) für eine in Translation entlang der optischen Photolumineszenzfaser (26) mobile Ausrüstung (14) umfasst.

11. Vorrichtung zur Übertragung von Informationen gemäß irgendeinem der voranstehenden Ansprüche, **dadurch gekennzeichnet, dass** die Auskehlung (40) eine oder mehrere reflektierende Wand / Wände aufweist.

12. Anlage (10), umfassend eine Führungsspur und eine mobile Ausrüstung (14), die auf der Führungsspur (12) geführt ist, **dadurch gekennzeichnet, dass** sie darüber hinaus eine Vorrichtung zur Übertragung von Informationen gemäß irgendeinem der voranstehenden Ansprüche umfasst, wobei der Maßstab (27) entlang der Führungsspur (12) befestigt ist oder die Führungsspur ganz oder teilweise bildet, wobei die Erregungsbeleuchtungsquelle (24) fest mit der mobilen Ausrüstung (14) verbunden ist und die lichtempfindliche Zelle (36) an einem Ende (34) der optischen Photolumineszenzfaser (26) angeordnet ist.

13. Herstellungsverfahren einer Vorrichtung zur Übertragung von Informationen gemäß irgendeinem der Ansprüche 1 bis 11, **dadurch gekennzeichnet, dass** zunächst die optische Photolumineszenzfaser (26) und das Band aus Plastikmaterial (48) derart aneinander befestigt sind, dass die ebene äußere Seite (50) des Bandes aus Plastikmaterial (48) zur optischen Photolumineszenzfaser (26) entgegensetzt angeordnet ist, um eine Teilgruppe zu bilden, dann diese Teilgruppe in der Auskehlung (40) derart eingeführt ist, dass die optische Photolumineszenzfaser (26) in der Auskehlung (40) angeordnet ist, dass das Band aus Plastikmaterial (48) die Auskehlung (40) abdeckt.

14. Verfahren zur Herstellung einer Vorrichtung zur Übertragung von Informationen gemäß irgendeinem der Ansprüche 1 bis 11, **dadurch gekennzeichnet, dass** zunächst die optische Photolumineszenzfaser (26) in der Auskehlung (48) angeordnet ist, dann das Band aus Plastikmaterial (48) zum Abdecken der Auskehlung (50) angewendet ist.

## Claims

1. A device for transmitting information from a moving equipment (14) guided along a predetermined fixed trajectory, comprising a photoluminescent optical fibre (26) housed in a groove (40), an excitation light source (24) arranged to be integral with the moving equipment (14) to transversally illuminate the photoluminescent optical fibre (26), and at least one photosensitive cell (36) located at an end (34) of the photoluminescent optical fibre (26), **characterised in that** the predetermined fixed trajectory is rectilinear, and **in that** the transmitting device further comprises a rigid rule (27) arranged to be positioned along the rectilinear trajectory, the rigid rule (27) comprising the groove (40) which is rectilinear, the photoluminescent optical fibre (26) housed in the groove (40) and fixed relative to the rule (27), and a transparent plastic material strip (48) covering the groove (40) and the photoluminescent optical fibre (26) and having a planar outer face (50) facing away from the groove (48).

2. The information transmitting device according to claim 1, **characterised in that** the plastic material strip (48) comprises a planar inner face (52) parallel and opposite to the planar outer face (50).

3. The information transmitting device according to any of the previous claims, **characterised in that** the plastic material strip (48) has a U-shaped profile with a bottom wall (70) forming the upper face (48) and two side walls (72) bearing against side walls of the groove (40).

4. The information transmitting device according to any of claims 1 or 2, **characterised in that** the plastic material strip (48) is planar, and with a thickness preferably less than 1mm, preferably less than 0.5mm, preferably less than 0.2mm.

5. The information transmitting device according to any of the previous claims, **characterised in that** the plastic material strip (48) comprises edges (46) which bear against the rule (27), on either side of the groove (40).

6. The information transmitting device according to claim 5, **characterised in that** the rule (27) comprises a recess (42) in which the groove (40) is formed, and which forms bearing faces (44) for the edges (46) of the plastic material strip (48), on either side of the groove (40).

7. The information transmitting device according to any of the previous claims, **characterised in that** the photoluminescent optical fibre (26) is in contact with the plastic material strip (48)

8. The information transmitting device according to any of the previous claims, **characterised in that** the plastic material strip (48) is covered with an antiscratch protective varnish.

9. The information transmitting device according to any of the previous claims, **characterised in that** the rule (27) further comprises a resin, preferably a cross-linked resin, at least partially coating the photoluminescent optical fibre (26), at least between the photoluminescent optical fibre (26) and the plastic material strip (48) or between the photoluminescent optical fibre (26) and a wall of the groove (40).

10. The information transmitting device according to any of the previous claims, **characterised in that** the rule (27) comprises guiding surfaces (74) for an equipment (14) translationally movable along the photoluminescent optical fibre (26).

11. The information transmitting device according to any of the previous claims, **characterised in that** the groove (40) has one or more reflecting walls.

12. An installation (10) comprising a guiding track, and a moving equipment (14) guided on the guiding track (12), **characterised in that** it further comprises an information transmitting device according to any of the previous claims, the rule (27) being fixed along the guiding track (12) or making up all or part of the guiding track, the excitation light source (24) being integral with the moving equipment (14) and the photosensitive cell (36) being disposed at an end (34) of the photoluminescent optical fibre (26).

13. A method for manufacturing an information transmitting device according to any of claims 1 to 11, **characterised in that** firstly the photoluminescent optical fibre (26) and the plastic material strip (48) are fixed to each other such that the planar outer face (50) of the plastic material strip (48) faces away from the photoluminescent optical fibre (26) to form a sub-assembly, and then this subassembly is inserted into the groove (40) so that the photoluminescent optical fibre (26) is positioned in the groove (40) and the plastic material strip (48) covers the groove (40).

14. The method for manufacturing an information transmitting device according to any of claims 1 to 11, **characterised in that** firstly the photoluminescent optical fibre (26) is positioned into the groove (48), and then the plastic material strip (48) is applied to cover the groove (50).
